# EUROPEAN PATENT APPLICATION

(11) **EP 4 592 347 A1**
(43) Date of publication of application: **30.07.2025**
(21) Application number: 24875658.7
(22) Date of filing: 03.09.2024
(51) Int. Cl.: C08L 33/20, C08L 51/04, C08L 51/00, C08L 67/02

(54) **THERMOPLASTIC RESIN COMPOSITION, METHOD FOR PRODUCING SAME, AND MOLDED ARTICLE INCLUDING SAME**

(30) Priority: 30.10.2023 KR 20230146275; 30.08.2024 KR 20240117467
(71) Applicant: LG Chem, Ltd., Seoul 07336 (KR)
(72) Inventor: CHOI, Suk Jo, Daejeon 34122 (KR); RYU, Hyun Jun, Daejeon 34122 (KR); KIM, Tae Hoon, Daejeon 34122 (KR); HAN, Seunghun, Daejeon 34122 (KR)
(74) Representative: Goddar, Heinz J.
(86) International application number: PCT/KR2024/013224
(87) International publication number: WO 2025/095321

(57) **Abstract**

The present invention relates to a thermoplastic resin composition, a method of preparing the same, and a molded article including the same. More particularly, the present invention relates to a thermoplastic resin composition including 100 parts by weight of a base resin including 79 to 86 % by weight of a non-graft copolymer (A) including an alkyl (meth)acrylate, an alkyl-substituted styrene-based compound, and a vinyl cyanide compound and 14 to 21 % by weight of a graft copolymer (B) including one or more selected from the group consisting of a graft copolymer (b-1) obtained by grafting an alkyl (meth)acrylate, an aromatic vinyl compound, and a vinyl cyanide compound onto a conjugated diene rubber having an average particle diameter of 200 to 500 nm and an alkyl acrylate-aromatic vinyl compound-vinyl cyanide compound graft copolymer (b-2) containing an alkyl acrylate rubber having an average particle diameter of 50 to 400 nm; and 8 to 21 parts by weight of a thermoplastic polyester elastomer (C), a method of preparing the thermoplastic resin composition, and a molded article including the thermoplastic resin composition.

According to the present invention, the present invention has an effect of providing a thermoplastic resin composition having excellent mechanical properties, heat resistance, chemical resistance, and suncream resistance, having high blackness, and being applicable to unpainted molded articles due to a uniform injection appearance, a method of preparing the thermoplastic resin composition, and a molded article including the thermoplastic resin composition.

## Description

### [Technical Field]

### [Cross-Reference to Related Applications]

This application claims priority to Korean Patent Application No. 10-2023-0146275, filed on October 30, 2023, and Korean Patent Application No. 10-2024-0117467, re-filed on August 30, 2024, based on the priority of the above patent, in the Korean Intellectual Property Office, the disclosures of each of which are incorporated herein by reference.

The present invention relates to a thermoplastic resin composition, a method of preparing the same, and a molded article including the same, and more particularly, to a thermoplastic resin composition having excellent mechanical properties, heat resistance, chemical resistance, and suncream resistance, having high blackness, and being applicable to an unpainted molded article by implementing a uniform injection appearance, a method of preparing the same, and a molded article including the same.

### [Background Art]

Recently, automobile manufacturers have made various attempts to omit the painting process of automobile parts for eco-friendliness and cost reduction. That is, research is being conducted on unpainted automobile parts. To produce unpainted automobile parts, excellent appearance quality and automobile reliability evaluation must be satisfied.

Resin compositions based on PMMA resins such as acrylate-styrene-acrylonitrile resin (hereinafter referred to as 'ASA resin')/polymethyl methacrylate resin (hereinafter referred to as 'PMMA resin') alloy and acrylonitrile-butadiene-styrene resin (hereinafter referred to as 'ABS resin')/PMMA resin alloy can implement a high level of blackness, but are difficult to apply to products due to limitations in implementing reliability quality.

In particular, to realize high heat resistance, chemical resistance, and suncream resistance required for automobile interior parts, a material was developed by adding a heat resistance resin to a resin composition based on a PMMA resin. However, due to poor compatibility between the resins, the desired appearance quality and uniform physical properties could not be obtained, and heat resistance and chemical resistance were also insufficient.

Accordingly, there is a need for the development of a material having excellent heat resistance, chemical resistance, and appearance quality and being applicable to unpainted molded articles.

### [Related Art Documents]

### [Patent Documents]

KR 10-0417066 B1

### [Disclosure]

### [Technical Problem]

Therefore, the present invention has been made in view of the above problems, and it is one object of the present invention to provide a thermoplastic resin composition having excellent mechanical properties, heat resistance, and suncream resistance, having high blackness, and being applicable to an unpainted molded article by implementing a uniform injection appearance.

It is another object of the present invention to provide a method of preparing the thermoplastic resin composition.

It is yet another object of the present invention to provide a molded article including the thermoplastic resin composition.

The above and other objects can be accomplished by the present invention described below.

### [Technical Solution]

I) In accordance with one aspect of the present invention, provided is a thermoplastic resin composition including 100 parts by weight of a base resin including 79 to 86 % by weight of a non-graft copolymer (A) including an alkyl (meth)acrylate, an alkyl-substituted styrene-based compound, and a vinyl cyanide compound and 14 to 21 % by weight of a copolymer (B) including a rubber component, an aromatic vinyl compound, and a vinyl cyanide compound; and 8 to 21 parts by weight of a thermoplastic polyester elastomer (C), wherein the thermoplastic resin composition has a brightness value (L value) of 1.5 or less as measured for a square disk-shaped injection specimen using a color meter in a specular component excluded (SCE) manner according to a CIE1976 L*a*b* color system; and the thermoplastic resin composition has a heat deflection temperature of 85 °C or higher as measured under 1.8 MPa according to ISO 75/Be.
II) According to I), the rubber component may be a conjugated diene rubber, an alkyl acrylate rubber, or a mixture thereof.
III) In accordance with another aspect of the present invention, provided is a thermoplastic resin composition including 100 parts by weight of a base resin including 79 to 86 % by weight of a non-graft copolymer (A) including an alkyl (meth)acrylate, an alkyl-substituted styrene-based compound, and a vinyl cyanide compound and 14 to 21 % by weight of a graft copolymer (B) including one or more selected from the group consisting of a graft copolymer (b-1) obtained by grafting an alkyl (meth)acrylate, an aromatic vinyl compound, and a vinyl cyanide compound onto a conjugated diene rubber having an average particle diameter of 200 to 500 nm and an alkyl acrylate-aromatic vinyl compound-vinyl cyanide compound graft copolymer (b-2) containing an alkyl acrylate rubber having an average particle diameter of 50 to 400 nm; and 8 to 21 parts by weight of a thermoplastic polyester elastomer (C).
IV) According to I) to III), based on a total weight thereof, the non-graft copolymer (A) may preferably include 30 to 60 % by weight of an alkyl (meth)acrylate, 20 to 50 % by weight of an alkyl-substituted styrene-based compound, and 5 to 35 % by weight of a vinyl cyanide compound.
V) According to I) to IV), based on a total weight thereof, the graft copolymer (b-1) may preferably include 35 to 65 % by weight of a conjugated diene rubber, 20 to 50 % by weight of an alkyl (meth)acrylate, 1 to 30 % by weight of an aromatic vinyl compound, and 1 to 20 % by weight of a vinyl cyanide compound.
VI) According to I) to V), based on a total weight thereof, the graft copolymer (b-2) may preferably include 30 to 70 % by weight of an alkyl acrylate rubber, 10 to 55 % by weight of an aromatic vinyl compound, and 1 to 30 % by weight of a vinyl cyanide compound.
VII) According to I) to VI), the thermoplastic polyester elastomer (C) may preferably have a melt flow rate of 0.5 to 10 g/10 min as measured at a temperature of 230 °C under a load of 2.16 kg according to ASTM D1238.
VIII) According to I) to VII), the thermoplastic polyester elastomer (C) may be preferably an elastomer including an aromatic dicarboxylic acid or an ester derivative thereof; an aliphatic diol; and a polyalkylene oxide.
IX) According to I) to VIII), the aromatic dicarboxylic acid may preferably include one or more selected from the group consisting of terephthalic acid, isophthalic acid, 2,6-naphthalene dicarboxylic acid, 1,5-naphthalene dicarboxylic acid, and 1,4-cyclohexane dicarboxylic acid.
X) According to I) to IX), the aliphatic diol may preferably include one or more selected from the group consisting of ethylene glycol, propylene glycol, 1,2-propanediol, 1,3-propanediol, 1,4-butanediol, 1,5-pentanediol, 1,6-hexanediol, and 1,4-cyclohexanedimethanol.
XI) According to I) to X), the polyalkylene oxide may preferably include one or more selected from the group consisting of polyethylene glycol, polypropylene glycol, polytetramethylene glycol, polyhexamethylene glycol, a copolymer of ethylene oxide and propylene oxide, an ethylene oxide addition polymer of polypropylene glycol, and a copolymer of ethylene oxide and tetrahydrofuran.
XII) According to I) to XI), based on 100 parts by weight of the base resin, the thermoplastic resin composition may preferably include a dye, a pigment, or a mixture thereof in an amount of 0.1 to 5 parts by weight.
XIII) According to I) to XII), the thermoplastic resin composition may preferably have a suncream resistance of grade 3 or higher in a gray scale.
XIV) According to I) to XIII), the thermoplastic resin composition may preferably have a heat deflection temperature of 85 °C or higher as measured for an injection specimen having a thickness of 4 mm under 1.8 MPa according to ISO 75/Be.
XV) In accordance with still another aspect of the present invention, provided is a method of preparing a thermoplastic resin composition, the method including kneading and extruding, at 190 to 280 °C and 100 to 800 rpm, 100 parts by weight of a base resin including 79 to 86 % by weight of a non-graft copolymer (A) including an alkyl (meth)acrylate, an alkyl-substituted styrene-based compound, and a vinyl cyanide compound and 14 to 21 % by weight of a graft copolymer (B) including one or more selected from the group consisting of a graft copolymer (b-1) obtained by grafting an alkyl (meth)acrylate, an aromatic vinyl compound, and a vinyl cyanide compound onto a conjugated diene rubber having an average particle diameter of 200 to 500 nm and an alkyl acrylate-aromatic vinyl compound-vinyl cyanide compound graft copolymer (b-2) containing an alkyl acrylate rubber having an average particle diameter of 50 to 400 nm; and 8 to 21 parts by weight of a thermoplastic polyester elastomer (C).
XVI) In accordance with yet another aspect of the present invention, provided is a molded article including the thermoplastic resin composition according to any one of I) to XIV).

### [Advantageous Effects]

According to the present invention, the present invention has an effect of providing a thermoplastic resin composition having excellent mechanical properties, heat resistance, chemical resistance, and suncream resistance, having high blackness, and being applicable to an unpainted molded article by implementing a uniform injection appearance, a method of preparing the same, and a molded article including the same.

In particular, a molded article including the thermoplastic resin composition according to the present invention has a color and uniform appearance quality at the level of painting when unpainted, so that the molded article can be provided as an automobile interior part with a quality higher than that required by the market, and has the advantages of eco-friendliness and reduced process cost.

### [Best Mode]

Hereinafter, a thermoplastic resin composition of the present invention, a method of preparing the same, and a molded article including the same are described in detail.

The present inventors confirmed that, when a base resin including one or more graft copolymers of a non-graft copolymer including an alkyl (meth)acrylate, an alkyl-substituted styrene-based compound, and a vinyl cyanide compound, a graft copolymer obtained by grafting an alkyl (meth) acrylate, an aromatic vinyl compound, and a vinyl cyanide compound onto conjugated diene rubber having a predetermined average particle diameter, and an alkyl acrylate-aromatic vinyl compound-vinyl cyanide compound graft copolymer containing an alkyl acrylate rubber having a predetermined average particle diameter and a thermoplastic polyester elastomer of a predetermined content were included, mechanical properties were excellent, and heat resistance, chemical resistance, suncream resistance, blackness, gloss, and appearance quality were improved. Based on these findings, the present inventors conducted further study to complete the present invention.

A thermoplastic resin composition according to the present invention is described in detail as follows.

The thermoplastic resin composition of the present invention includes 100 parts by weight of a base resin including 79 to 86 % by weight of a non-graft copolymer (A) including an alkyl (meth)acrylate, an alkyl-substituted styrene-based compound, and a vinyl cyanide compound and 14 to 21 % by weight of a copolymer (B) including a rubber component, an aromatic vinyl compound, and a vinyl cyanide compound; and 8 to 21 parts by weight of a thermoplastic polyester elastomer (C), wherein the thermoplastic resin composition has a brightness value (L value) of 1.5 or less as measured for a square disk-shaped injection specimen using a color meter in a specular component excluded (SCE) manner according to a CIE1976 L*a*b* color system; and the thermoplastic resin composition has a heat deflection temperature of 85 °C or higher as measured under 1.8 MPa according to ISO 75/Be. In this case, mechanical properties, heat resistance, chemical resistance, and suncream resistance may be excellent, high blackness may be expressed, color and appearance similar to those of a painted product may be realized due to uniform injection appearance, and thus the thermoplastic resin composition may be applied to unpainted molded articles.

In addition, the thermoplastic resin composition of the present invention includes 100 parts by weight of a base resin including 79 to 86 % by weight of a non-graft copolymer (A) including an alkyl (meth)acrylate, an alkyl-substituted styrene-based compound, and a vinyl cyanide compound and 14 to 21 % by weight of a graft copolymer (B) including one or more selected from the group consisting of a graft copolymer (b-1) obtained by grafting an alkyl (meth)acrylate, an aromatic vinyl compound, and a vinyl cyanide compound onto a conjugated diene rubber having an average particle diameter of 200 to 500 nm and an alkyl acrylate-aromatic vinyl compound-vinyl cyanide compound graft copolymer (b-2) containing an alkyl acrylate rubber having an average particle diameter of 50 to 400 nm; and 8 to 21 parts by weight of a thermoplastic polyester elastomer (C). In this case, mechanical properties, heat resistance, chemical resistance, and suncream resistance may be excellent, high blackness may be expressed, color and appearance similar to those of a painted product may be realized due to uniform injection appearance, and thus the thermoplastic resin composition may be applied to unpainted molded articles.

Hereinafter, each component of the thermoplastic resin composition of the present invention is described in detail.

### (A) Non-graft polymer

For example, 100 % by weight of the base resin, the non-graft copolymer (A) may be included in an amount of 79 to 86 % by weight, preferably 80 to 85 % by weight, more preferably 80 to 82 % by weight. Within this range, heat resistance, chemical resistance, and suncream resistance may be excellent, high blackness may be expressed, color and appearance similar to those of a painted product may be realized due to uniform injection appearance, and thus the thermoplastic resin composition may be applied to unpainted molded articles.

In the present disclosure, 'non-graft' means not grafted, and more specifically, not graft-polymerized under rubber.

For example, the non-graft copolymer (A) may include an alkyl (meth)acrylate, an alkyl-substituted styrene-based compound, and a vinyl cyanide compound. In this case, heat resistance, chemical resistance, and suncream resistance may be excellent, high blackness may be expressed, color and appearance similar to those of a painted product may be realized due to uniform injection appearance, and thus the thermoplastic resin composition may be applied to unpainted molded articles.

Based on a total weight thereof, the non-graft copolymer (A) may include preferably 30 to 60 % by weight of an alkyl (meth)acrylate, 20 to 50 % by weight of an alkyl-substituted styrene-based compound, and 5 to 35 % by weight of a vinyl cyanide compound, more preferably 35 to 55 % by weight of an alkyl (meth)acrylate, 25 to 45 % by weight of an alkyl-substituted styrene-based compound, and 10 to 30 % by weight of a vinyl cyanide compound, still more preferably 40 to 50 % by weight of an alkyl (meth)acrylate, 30 to 40 % by weight of an alkyl-substituted styrene-based compound, and 15 to 25 % by weight of a vinyl cyanide compound, still more preferably 43 to 48 % by weight of an alkyl (meth)acrylate, 33 to 38 % by weight of an alkyl-substituted styrene-based compound, and 17 to 22 % by weight of a vinyl cyanide compound. Within this range, compatibility with the copolymer (B) to be described later may be excellent, transparency, gloss, heat resistance, chemical resistance, and suncream resistance may be excellent, high blackness may be expressed, color and appearance similar to those of a painted product may be realized due to uniform injection appearance, and thus the thermoplastic resin composition may be applied to unpainted molded articles.

The non-graft copolymer (A) may be preferably a methyl methacrylate-α-methyl styrene-acrylonitrile copolymer. In this case, transparency, heat resistance, chemical resistance, and suncream resistance may be excellent, high blackness may be expressed, color and appearance similar to those of a painted product may be realized due to uniform injection appearance, and thus the thermoplastic resin composition may be applied to unpainted molded articles.

For example, the non-graft copolymer (A) may have a weight average molecular weight of 50,000 to 200,000 g/mol, preferably 70,000 to 150,000 g/mol, more preferably 80,000 to 120,000 g/mol. Within this range, mechanical properties, such as impact strength and tensile strength, and injection formability may be excellent.

In the present disclosure, unless otherwise defined, the weight average molecular weight may be measured using gel permeation chromatography (GPC, Waters Breeze). As a specific example, the weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. As a specific measurement example, the weight average molecular weight may be measured under conditions of solvent: THF, column temperature: 40 °C, flow rate: 0.3 ml/min, sample concentration: 20 mg/ml, injection amount: 5 µl, column model: 1× PLgel 10 µm MiniMix-B (250 × 4.6 mm) + 1× PLgel 10 µm MiniMix-B (250 × 4.6 mm) + 1× PLgel 10 µm MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, the non-graft polymer (A) may have a glass transition temperature of 110 °C or higher, preferably 115 °C or higher, more preferably 115 to 150 °C as measured according to ASTM D3418. In this case, heat resistance may be improved.

In the present disclosure, the glass transition temperature may be measured at a temperature increase rate of 10 °C/min using a differential scanning calorimeter (TA Instruments Q100 DSC) according to ASTM D3418.

For example, the non-graft polymer (A) may have a melt flow index of 8 g/10 min or more, preferably 10 g/10 min or more, more preferably 10 to 20 g/10 min as measured at 220 °C under a load of 10 Kg according to ASTM D1238. Within this range, processability may be excellent.

For example, the non-graft polymer (A) may have a refractive index of 1.52 to 1.55, preferably 1.53 to 1.54 as measured at room temperature using an Abbe refractometer according to ASTM D542. Within this range, transparency and gloss may be excellent, and heat resistance and weather resistance may be excellent.

In the present disclosure, room temperature may be any point within the range of 23 ± 3 °C.

For example, the non-graft polymer (A) may be prepared by including step i) of feeding a reaction mixture including 30 to 60 % by weight of an alkyl (meth)acrylate, 20 to 50 % by weight of an alkyl-substituted styrene-based compound, 5 to 35 % by weight of a vinyl cyanide compound, a solvent, and a multifunctional group-containing organic peroxide initiator into a polymerization device and performing bulk polymerization to obtain a polymer reaction solution; and step ii) of feeding the polymer reaction solution of step i) into a volatilization tank and separating the polymer by evaporating the unreacted monomer and solvent.

The bulk polymerization of step i) may be preferably performed at 100 to 130 °C for a residence time of 6 to 8 hours in a reactor, more preferably at 110 to 120 °C for a residence time of 7 to 8 in a reactor.

The polymerization device used in the polymerization reaction is not particularly limited, but a continuous polymerization device having two or more stirring tank reactors connected in series is preferable. At this time, there is no special limitation on the reactor, but the first reactor is preferably a stirring tank with a heat exchanger attached to the front end of the reactor, and the second or subsequent reactors are preferably evaporative stirring tank reactors including a stirring tank, a storage tank, a condenser, and a pressure regulating plate.

For example, the solvent may be toluene, methylethyl ketone or a mixture thereof, preferably toluene. In this case, the viscosity may be easily controlled and the decrease in polymerization conversion may be suppressed.

For example, the multifunctional group-containing organic peroxide initiator may include one or more selected from the group consisting of 1,1-bis(t-butyl peroxy)-3,3,5-trimethylcyclohexane, 1,1-bis(t-butylperoxy)cyclohexane, and 1,1-bis(t-butylperoxy) 2-methylcyclohexane. In this case, productivity may be excellent, and heat discoloration may be reduced.

For example, based on 100 parts by weight in total of the alkyl-substituted styrene-based compound, the alkyl (meth)acrylate, and the vinyl cyanide compound, the organic peroxide initiator may be included in an amount of 0.05 to 0.3 parts by weight. Within this range, polymerization conversion rate and molecular weight may be increased.

Step ii) may be performed by a conventional volatilization and separation process in a conventional volatilization tank. For example, a polymer reaction solution polymerized and discharged from a continuous polymerization device is introduced into the first volatilization tank equipped with a heat exchanger that maintains a temperature of 100 to 200 °C and a vacuum pressure of 500 to 650 torr, and then the reaction solution flowing out from the first volatilization tank is introduced into the second volatilization tank equipped with a heat exchanger that maintains a temperature of 200 to 250 °C and a vacuum pressure of 50 torr or less, preferably 20 to 30 torr. Then, the unreacted monomer and solvent are evaporated and condensed again to be reintroduced as raw materials, and the polymer may be processed into pellets while passing through a transfer pump and extruder.

For example, the non-graft copolymer (A) may be prepared by solution polymerization, bulk polymerization, emulsion polymerization, or suspension polymerization, preferably bulk polymerization. Solution polymerization, bulk polymerization, emulsion polymerization, and suspension polymerization methods commonly used in the art to which the present invention pertains may be used in the present invention without particular limitation.

In the present disclosure, a polymer including a certain compound means a polymer prepared by polymerizing the compound, and a unit in the polymer is derived from the compound.

In the present disclosure, the alkyl (meth)acrylate may include both alkyl acrylate and alkyl methacrylate.

In the present disclosure, for example, the alkyl acrylate may be an alkyl acrylate containing an alkyl group having 1 to 15 carbon atoms. Preferably, the alkyl acrylate may include one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate, and lauryl acrylate, more preferably an alkyl acrylate containing a chain alkyl group having 1 to 4 or 8 carbon atoms, still more preferably n-butyl acrylate or 2-ethylhexyl acrylate.

In the present disclosure, for example, the alkyl methacrylate may be an alkyl methacrylate containing an alkyl group having 1 to 15 carbon atoms. Preferably, the alkyl methacrylate may include one or more selected from the group consisting of methyl methacrylate, ethyl methacrylate, butyl methacrylate, 2-ethylbutyl methacrylate, 2-ethylhexylmethacrylate, and lauryl methacrylate, more preferably an alkyl methacrylate containing a chain alkyl group having 1 to 4 carbon atoms, still more preferably methyl methacrylate.

In the present disclosure, for example, the alkyl-substituted styrene-based compound may include one or more selected from the group consisting of α-methyl styrene, ρ-methyl styrene, o-ethyl styrene, m-ethyl styrene, ρ-ethyl styrene, ρ-t-butyl styrene, and 2,4-dimethyl styrene, preferably α-methyl styrene. In this case, heat resistance may be excellent.

In the present disclosure, for example, the vinyl cyanide compound may include one or more selected from the group consisting of acrylonitrile, methacrylonitrile, ethylacrylonitrile, and isopropylacrylonitrile, preferably acrylonitrile.

### (B) Copolymer including a rubber component, an aromatic vinyl compound, and a vinyl cyanide compound

For example, based on 100 % by weight of the base resin, the copolymer (B) may be included in an amount of 14 to 21 % by weight, preferably 15 to 20 % by weight, more preferably 18 to 20 % by weight. Within this range, mechanical properties, heat resistance, chemical resistance, and suncream resistance may be excellent.

For example, the rubber component may be a conjugated diene rubber, an alkyl acrylate rubber, or a mixture thereof. In this case, mechanical properties, heat resistance, chemical resistance, and suncream resistance may be excellent.

The aromatic vinyl compound and the vinyl cyanide compound may be within the same range as the types of the aromatic vinyl compound and vinyl cyanide compound included in the non-graft copolymer (A) of the present invention.

The copolymer (B) may be preferably a copolymer including an alkyl acrylate rubber, an aromatic vinyl compound, and a vinyl cyanide compound; a copolymer including a conjugated diene rubber, an alkyl (meth)acrylate, an aromatic vinyl compound, and a vinyl cyanide compound; or a mixture thereof, more preferably a mixture of a copolymer including an alkyl acrylate rubber, an aromatic vinyl compound, and a vinyl cyanide compound and a copolymer including a conjugated diene rubber, an alkyl (meth)acrylate, an aromatic vinyl compound, and a vinyl cyanide compound, specifically, a mixture of a methyl methacrylate-acrylonitrile-butadienestyrene copolymer and an alkyl acrylate-styrene-acrylonitrile copolymer. In this case, mechanical properties, heat resistance, chemical resistance, and suncream resistance may be excellent.

More preferably, the copolymer (B) may include one or more selected from the group consisting of a graft copolymer (b-1) obtained by grafting an alkyl (meth)acrylate, an aromatic vinyl compound, and a vinyl cyanide compound onto a conjugated diene rubber having an average particle diameter of 200 to 500 nm and an alkyl acrylate-aromatic vinyl compound-vinyl cyanide compound graft copolymer (b-2) containing an alkyl acrylate rubber having an average particle diameter of 50 to 400 nm, still more preferably both the graft copolymer (b-1) and the graft copolymer (b-2). In this case, mechanical properties, heat resistance, chemical resistance, and suncream resistance may be excellent.

When both the graft copolymer (b-1) and the graft copolymer (b-2) are included, the weight ratio of the graft copolymer (b-1) to the graft copolymer (b-2) may be 9:1 to 1:9, preferably 7:3 to 5:5. Within this range, mechanical properties, heat resistance, chemical resistance, and suncream resistance may be excellent.

### (b-1) Graft copolymer obtained by grafting an alkyl (meth)acrylate, an aromatic vinyl compound, and a vinyl cyanide compound onto a conjugated diene rubber having an average particle diameter of 200 to 500 nm

For example, based on a total weight thereof, the graft copolymer (b-1) may include 35 to 65 % by weight of a conjugated diene rubber, 20 to 50 % by weight of an alkyl (meth)acrylate, 1 to 30 % by weight of an aromatic vinyl compound, and 1 to 20 % by weight of a vinyl cyanide compound, preferably 40 to 60 % by weight of a conjugated diene rubber, 25 to 45 % by weight of an alkyl (meth)acrylate, 1 to 25 % by weight of an aromatic vinyl compound, and 1 to 15 % by weight of a vinyl cyanide compound, more preferably 45 to 55 % by weight of a conjugated diene rubber, 30 to 40 % by weight of an alkyl (meth)acrylate, 5 to 20 % by weight of an aromatic vinyl compound, and 1 to 10 % by weight of a vinyl cyanide compound, still more preferably 47 to 52 % by weight of a conjugated diene rubber, 33 to 38 % by weight of an alkyl (meth)acrylate, 10 to 15 % by weight of an aromatic vinyl compound, and 1 to 5 % by weight of a vinyl cyanide compound. Within this range, mechanical properties, transparency, gloss, and colorability may be excellent.

The conjugated diene rubber may have an average particle diameter of preferably 200 to 450 nm, more preferably 250 to 400 nm, still more preferably 250 to 350 nm, still more preferably 270 to 320 nm. Within this range, mechanical properties, transparency, gloss, and colorability may be excellent.

In the present disclosure, the average particle diameter is measured by dynamic light scattering. Specifically, the average particle diameter is measured as an intensity value using a Nicomp 380 particle size analyzer (manufacturer: PSS) in a Gaussian mode. As a specific measurement example, a sample is prepared by diluting 0.1 g of latex (total solids content: 35 to 50 wt%) 1,000 to 5,000-fold with distilled water. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C, measurement wavelength: 632.8 nm, and channel width: 10 µsec.

For example, the conjugated diene rubber may be prepared by adding 0.2 to 4 parts by weight of an emulsifier, 0.02 to 1.5 parts by weight of a polymerization initiator, 0.5 parts by weight of an electrolyte, 0.1 to 0.5 parts by weight of a molecular weight regulator, and 90 to 130 parts by weight of deionized water to 100 parts by weight of a conjugated diene compound and then performing emulsion polymerization at 65 to 85 °C for 25 to 50 hours.

For example, the conjugated diene rubber may have a gel content of 50 to 99 % by weight, preferably 60 to 99 % by weight, more preferably 70 to 95 % by weight, still more preferably 80 to 95 % by weight. Within this range, a graft copolymer may be effectively formed on the outside of rubber particles, and thus mechanical properties, transparency, gloss, colorability, and processability may be excellent.

In the present disclosure, when measuring the gel content, 1 g of a graft copolymer is added to 30 ml of acetone, followed by stirring at room temperature for 12 hours. Then, centrifugation is performed to separate insoluble matter that is not dissolved in acetone, followed by drying for 12 hours. Then, the weight of the insoluble matter is measured, and the gel content is calculated by Equation 1 below. As a specific measurement example, when measuring the gel content, 1 g of a graft copolymer is added to 30 ml of acetone, followed by stirring at 210 rpm and room temperature using an orbital shaker (equipment name: Lab companion SKC-6075) for 12 hours. Then, centrifugation is performed at 0 °C and 18,000 rpm for 3 hours using a centrifuge (Supra R30, Hanil Science Co.) to separate insoluble matter that is not dissolved in acetone, followed by drying in a forced convection oven (equipment name: Lab companion OF-12GW) set to 85 °C for 12 hours via forced circulation. Then, the weight of the insoluble matter is measured, and the gel content is calculated by Equation 1 below. Gel content (wt%) = [Weight (g) of insoluble matter (gel)/Weight (g) of sample] × 100

For example, the conjugated diene rubber used in the emulsion polymerization may be a polybutadiene rubber latex having a swelling index of 12 to 40, preferably a polybutadiene rubber latex having a swelling index of 20 to 35. In this case, mechanical properties and processability may be excellent.

In the present disclosure, when measuring the swelling index, 1 g of the graft copolymer is added to 30 ml of acetone, followed by stirring at room temperature for 12 hours. Then, centrifugation is performed to separate insoluble matter that is not dissolved in acetone, followed by drying for 12 hours. Then, the weight of the insoluble matter is measured, and the swelling index is calculated by Equation 2 below. As a specific measurement example, when measuring the swelling index, 1 g of a graft copolymer is added to 30 ml of acetone, followed by stirring at 210 rpm and room temperature using an orbital shaker (equipment name: Lab companion SKC-6075) for 12 hours. Then, centrifugation is performed at 0 °C and 18,000 rpm for 3 hours using a centrifuge (Supra R30, Hanil Science Co.) to separate insoluble matter that is not dissolved in acetone, followed by drying in a forced convection oven (equipment name: Lab companion OF-12GW) set to 85 °C for 12 hours via forced circulation. Then, the weight of the insoluble matter is measured, and the swelling index is calculated by Equation 2 below. Swelling index = Weight before drying after centrifugation / Weight after drying after centrifugation

The conjugated diene rubber may include preferably one or more selected from the group consisting of butadiene, polybutadiene, styrene-butadiene, polyisoprene, and butadiene-isoprene. In this case, mechanical properties and processability may be excellent.

For example, the emulsifier may include one or more selected from the group consisting of alkyl aryl sulfonates, alkali methylalkyl sulfates, sulfonated alkyl esters, soaps of fatty acids, and alkali salts of rosin acids.

For example, based on 100 parts by weight of the monomer mixture, the emulsifier may be included in an amount of 0.2 to 1.5 parts by weight, preferably 0.5 to 1.0 part by weight.

For example, the polymerization initiator may include one or more selected from the group consisting of a water-soluble persulfate, a fat-soluble peroxy compound, and a redox polymerization initiator.

For example, the water-soluble persulfate may include one or more selected from the group consisting of persulfate, sodium persulfate, and potassium persulfate.

For example, the fat-soluble peroxy compound may include one or more selected from the group consisting of cumene hydroperoxide, diisopropyl benzene hydroperoxide, azobis isobutyl nitrile, tertiary butyl hydroperoxide, paramenthane hydroperoxide, and benzoyl peroxide.

For example, the redox polymerization initiator may include one or more selected from the group consisting of sodium formaldehyde sulfoxylate, sodium ethylenediamine tetraacetate, ferrous sulfate, dextrose, sodium pyrophosphate, and sodium sulfite.

For example, based on 100 parts by weight of the monomer mixture, the polymerization initiator may be used in an amount of 0.02 to 0.3 parts by weight, preferably 0.1 to 0.2 parts by weight.

For example, the electrolyte may include one or more selected from the group consisting of KCl, NaCl, KHCO₃, NaHCO₃, K₂CO₃, Na₂CO₃, KHSO₃, K₄P₂O₇, K₃PO₄, Na₃PO₄, K₂HPO₄, and Na₂HPO₄.

For example, the molecular weight regulator may include mercaptans, preferably tertiary dodecyl mercaptan.

For example, the emulsion polymerization may be performed at 65 to 85 °C, preferably 70 to 80 °C. Within this range, the gel content of rubber latex and swelling index may be easily controlled.

For example, the graft copolymer (b-1) according to the present invention may be prepared by grafting a monomer mixture containing an alkyl (meth)acrylate, an aromatic vinyl compound, and a vinyl cyanide compound onto the prepared conjugated diene rubber latex by emulsion polymerization.

For example, the emulsion polymerization may be performed at 65 to 85 °C for 3 to 10 hours, preferably at 70 to 80 °C for 4 to 9 hours.

For example, based on a total weight of the base resin, the graft copolymer (b-1) may be included in an amount of 0 to 21 % by weight, preferably 0 to 18 % by weight, more preferably 3 to 18 % by weight, still more preferably 5 to 18 % by weight, still more preferably 5 to 14 % by weight, still more preferably 5 to 11 % by weight, still more preferably 7 to 11 % by weight, as a most preferred example 8 to 10 % by weight. Within this range, mechanical properties, transparency, gloss, and colorability may be excellent.

In the present disclosure, for example, the conjugated diene compound may include one or more selected from the group consisting of 1,3-butadiene, 2,3-dimethyl-1,3-butadiene, 2-ethyl-1,3-butadiene, 1,3-pentadiene, isoprene, chloroprene, and piperylene, preferably 1,3-butadiene.

In the present disclosure, for example, the aromatic vinyl compound may include one or more selected from the group consisting of styrene, α-methyl styrene, o-methyl styrene, ρ-methyl styrene, m-methyl styrene, ethyl styrene, isobutyl styrene, t-butyl styrene, o-bromo styrene, ρ-bromo styrene, m-bromo styrene, o-chloro styrene, ρ-chloro styrene, m-chloro styrene, vinyltoluene, vinylxylene, fluorostyrene, and vinylnaphthalene, preferably one or more selected from the group consisting of styrene and α-methyl styrene, more preferably styrene. In this case, due to the appropriate fluidity, processability and mechanical properties such as impact resistance may be excellent.

The types of the alkyl (meth)acrylate and the vinyl cyanide compound included in the graft copolymer (b-1) may be within the same category as the types of the alkyl (meth)acrylate and the vinyl cyanide compound included in the non-graft copolymer (A) of the present invention.

### (b-2) Alkyl acrylate-aromatic vinyl compound-vinyl cyanide compound graft copolymer containing an alkyl acrylate rubber having an average particle diameter of 50 to 400 nm

For example, the graft copolymer (b-2) may include an alkyl acrylate rubber (core) and an aromatic vinyl compound-vinyl cyanide compound copolymer (shell) surrounding the core.

For example, based on a total weight thereof, the graft copolymer (b-2) may include 30 to 70 % by weight of an alkyl acrylate rubber, 10 to 55 % by weight of an aromatic vinyl compound, and 1 to 30 % by weight of a vinyl cyanide compound, preferably 40 to 60 % by weight of an alkyl acrylate rubber, 20 to 45 % by weight of an aromatic vinyl compound, and 5 to 20 % by weight of a vinyl cyanide compound, more preferably 45 to 55 % by weight of an alkyl acrylate rubber, 30 to 40 % by weight of an aromatic vinyl compound, and 10 to 15 % by weight of a vinyl cyanide compound. Within this range, mechanical properties, processability, weather resistance, transparency, gloss and colorability may be excellent.

The alkyl acrylate rubber may have an average particle diameter of preferably 80 to 400 nm, more preferably 100 to 400 nm, still more preferably 100 to 150 nm or 300 to 400 nm. Within this range, physical property balance, mechanical properties, gloss, transparency, and colorability may be excellent.

For example, the alkyl acrylate rubber may be prepared by performing emulsion polymerization of an alkyl acrylate, preferably by mixing an alkyl acrylate, an emulsifier, an initiator, a grafting agent, a crosslinking agent, an electrolyte, and a solvent and performing emulsion polymerization of the mixture. In this case, due to excellent grafting efficiency, mechanical properties may be excellent.

For example, the alkyl acrylate rubber may include a seed, preferably a rubber seed.

For example, based on 100 % by weight of the graft copolymer (b-2), the seed may be prepared by polymerizing 1 to 20 % by weight, preferably 2 to 15 % by weight, more preferably 3 to 10 % by weight of one or more monomers selected from the group consisting of an aromatic vinyl compound, a vinyl cyanide compound, and an alkyl acrylate. Within this range, impact strength, weather resistance, and physical property balance may be excellent.

For example, the aromatic vinyl compound-vinyl cyanide compound copolymer (shell) may have a weight average molecular weight of 40,000 to 120,000 g/mol, preferably 50,000 to 110,000 g/mol, more preferably 60,000 to 110,000 g/mol. Within this range, impact strength, tensile strength, and processability may be excellent.

For example, the graft copolymer (b-2) may be prepared by emulsion polymerization. In this case, mechanical properties, processability, weather resistance, transparency, gloss, and colorability may be excellent.

The emulsion polymerization may be performed using an emulsion polymerization method commonly practiced in the technical field to which the present invention pertains without particular limitation. For example, an emulsion graft polymerization method may be used.

For example, the graft copolymer (b-2) may have a grafting degree of 25 % or more, preferably 30 % or more, more preferably 30 to 70 %, still more preferably 30 to 60 %, still more preferably 30 to 50 % as calculated by Equation 3 below. Within this range, mechanical properties and processability may be excellent. Grafting degree (%) = [Weight (g) of grafted monomers/Rubber weight (g)] × 100

In Equation 3, the weight (g) of grafted monomers is obtained by subtracting the rubber weight (g) from a weight of insoluble matter (gel) obtained by dissolving a graft copolymer in acetone and performing centrifugation, and the rubber weight (g) is a weight (g) of rubber components theoretically added to graft copolymer powder.

When the weight of the insoluble matter (gel) is measured, 0.5 g of the powdered graft copolymer is added to 50 ml of acetone, followed by stirring at room temperature for 12 hours. Then, centrifugation is performed to separate insoluble matter that is not dissolved in acetone, followed by drying for 12 hours. Then, the weight of the insoluble matter (gel) is measured. The rubber weight (g) is the weight (g) of rubber components theoretically added to 0.5 g of the powdered graft copolymer.

As a specific measurement example, when measuring the weight (g) of insoluble matter (gel), 0.5 g of a powdered graft copolymer is added to 50 ml of acetone, followed by stirring at 210 rpm and room temperature using an orbital shaker (equipment name: Lab companion SKC-6075) for 12 hours. Then, centrifugation is performed at 0 °C and 18,000 rpm for 3 hours using a centrifuge (Supra R30, Hanil Science Co.) to separate insoluble matter that is not dissolved in acetone, followed by drying in a forced convection oven (equipment name: Lab companion OF-12GW) set to 85 °C for 12 hours via forced circulation. Then, the weight of the insoluble matter (gel) is measured.

For example, the graft copolymer (b-2) may have a weight average molecular weight of 60,000 to 200,000 g/mol, preferably 70,000 to 180,000 g/mol, more preferably 80,000 to 170,000 g/mol, still more preferably 100,000 to 160,000 g/mol. Within this range, mechanical properties, processability, weather resistance, transparency, gloss, and colorability may be excellent.

For example, based on a total weight of the base resin, the graft copolymer (b-2) may be included in an amount of 0 to 21 % by weight, preferably 0 to 18 % by weight, more preferably 3 to 18 % by weight, still more preferably 5 to 18 % by weight, still more preferably 5 to 14 % by weight, still more preferably 5 to 11 % by weight, still more preferably 7 to 11 % by weight, as a most preferred example 8 to 10 % by weight. Within this range, mechanical properties, processability, weather resistance, transparency, gloss, and colorability may be excellent.

The types of alkyl acrylate, aromatic vinyl compound, and vinyl cyanide compound included in the graft copolymer (b-2) may be within the same category as the types of alkyl acrylate, aromatic vinyl compound, and vinyl cyanide compound included in the non-graft copolymer (A) of the present invention.

### (C) Thermoplastic polyester elastomer

For example, based on 100 parts by weight of the base resin, the thermoplastic polyester elastomer (C) may be included in an amount of 8 to 21 parts by weight, preferably 9 to 21 parts by weight, more preferably 10 to 21 parts by weight, still more preferably 13 to 21 parts by weight. Within this range, mechanical properties, weather resistance, transparency, low-whitening characteristics, and thin film processing may be excellent, and appearance quality and emotional quality may be improved.

For example, the thermoplastic polyester elastomer (C) may be an elastomer including an aromatic dicarboxylic acid or an ester derivative thereof; an aliphatic diol; and a polyalkylene oxide. In this case, flexibility, mechanical strength, and heat resistance may be increased, and the physical balance may be excellent.

For example, a crystalline hard segment may be formed from the aromatic dicarboxylic acid or the ester derivative thereof and an aliphatic diol, and a soft segment may be formed from a polyalkylene oxide, and the crystalline hard segment and the soft segment may be randomly arranged.

For example, the aromatic dicarboxylic acid may include one or more selected from the group consisting of terephthalic acid, isophthalic acid, 2,6-naphthalene dicarboxylic acid, 1,5-naphthalene dicarboxylic acid, and 1,4-cyclohexane dicarboxylic acid, preferably terephthalic acid, isophthalic acid, or a mixture thereof.

For example, the ester derivative of the aromatic dicarboxylic acid may include one or more selected from the group consisting of dimethyl terephthalate, dimethyl isophthalate, 2,6-dimethyl naphthalene dicarboxylate, dimethyl 1,5-naphthalene dicarboxylic acid, and dimethyl 1,4-cyclohexane dicarboxylate, preferably dimethyl terephthalate, dimethyl isophthalate, or a mixture thereof.

Based on a total weight of the thermoplastic polyester elastomer, the aromatic dicarboxylic acid or the ester derivative thereof may be included in an amount of 25 to 70 % by weight, preferably 30 to 65 % by weight, more preferably 35 to 60 % by weight. Within this range, the reaction may be performed easily.

For example, the aliphatic diol may have a number average molecular weight of 300 g/mol or less, preferably 60 to 300 g/mol.

In the present disclosure, unless otherwise defined, number average molecular weight may be measured using gel permeation chromatography (GPC, Waters Breeze). As a specific example, number average molecular weight may be measured using tetrahydrofuran (THF) as an eluate through gel permeation chromatography (GPC, Waters Breeze). In this case, number average molecular weight is obtained as a relative value to a polystyrene (PS) standard sample. As a specific measurement example, number average molecular weight may be measured under conditions of solvent: THF, column temperature: 40 °C, flow rate: 0.3 ml/min, sample concentration: 20 mg/ml, injection amount: 5 µl, column model: 1× PLgel 10 µm MiniMix-B (250 × 4.6 mm) + 1× PLgel 10 µm MiniMix-B (250 × 4.6 mm) + 1× PLgel 10 µm MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw, and PDI): OECD TG 118.

The aliphatic diol may include preferably one or more selected from the group consisting of ethylene glycol, propylene glycol, 1,2-propanediol, 1,3-propanediol, 1,4-butanediol, 1,5-pentanediol, 1,6-hexanediol, and 1,4-cyclohexanedimethanol, more preferably 1,4-butanediol.

For example, based on a total weight of the thermoplastic polyester elastomer, the aliphatic diol may be included in an amount of 15 to 45 % by weight, preferably 20 to 40 % by weight, more preferably 25 to 40 % by weight. Within this range, the reaction may proceed smoothly, and the physical property balance between flexibility and mechanical strength may be excellent.

For example, the polyalkylene oxide may be an aliphatic polyether, and may include, as a soft segment, one or more selected from the group consisting of polyethylene glycol, polypropylene glycol, polytetramethylene glycol, polyhexamethylene glycol, a copolymer of ethylene oxide and propylene oxide, an ethylene oxide addition polymer of polypropylene glycol, and a copolymer of ethylene oxide and tetrahydrofuran, preferably polytetramethylene glycol.

For example, based on a total weight of the thermoplastic polyester elastomer, the polyalkylene oxide may be included in an amount of 5 to 50 % by weight, preferably 10 to 45 % by weight, more preferably 15 to 40 % by weight. Within this range, flexibility, mechanical strength, heat resistance, and physical property balance may be excellent.

For example, the polyalkylene oxide may have a number average molecular weight of 600 to 3,000 g/mol, preferably 1,000 to 2,000 g/mol. Within this range, polymerization reaction may proceed stably, and a thermoplastic polyester elastomer having excellent physical property balance may be obtained.

The polyalkylene oxide may preferably be polypropylene glycol having terminals capped with ethylene oxide. In this case, polymerization reactivity may be excellent.

The thermoplastic polyester elastomer (C) may include preferably a branching agent. In this case, the melting viscosity and melting strength of the elastomer may be increased.

For example, the branching agent may include one or more selected from the group consisting of glycerol, pentaerythritol, trimellitic anhydride, trimellitic acid, trimethylol propane, and neopentyl glycol, preferably trimellitic anhydride. In this case, the melting viscosity and melting strength of the elastomer may be increased.

For example, based on 100 % by weight in total of the thermoplastic polyester elastomer, the branching agent may be included in an amount of 0.05 to 0.1 % by weight, preferably 0.05 to 0.09 % by weight, more preferably 0.06 to 0.09 % by weight. Within this range, melting strength may be increased.

For example, the thermoplastic polyester elastomer (C) may be prepared by melt polymerization of an aromatic dicarboxylic acid or an ester derivative thereof, an aliphatic diol, and a polyalkylene oxide. In this case, the physical property balance between flexibility, mechanical strength, and heat resistance may be excellent, and formability may be further improved.

The thermoplastic polyester elastomer (C) may preferably be prepared by additional solid-state polymerization of the resin prepared by melt polymerization. In this case, the physical property balance between flexibility, mechanical strength, and heat resistance may be excellent, and formability may be further improved.

Preferably, when the thermoplastic polyester elastomer is prepared, the aromatic dicarboxylic acid, the aliphatic diol, and the polyalkylene oxide are subjected to transesterification at 140 to 215 °C for 110 to 130 minutes under a titanium butoxide (TBT) catalyst to obtain a bis(4-hydroxy) butyl terephthalate (BHBT) oligomer, the TBT catalyst is added again, and then melt polymerization is performed at 215 to 245 °C for 110 to 130 minutes with stepwise pressure reduction from 760 torr to 0.3 torr.

The melt polymerization reaction may be performed until a melt flow rate, measured at 230 °C under a load of 2.16 kg according to ASTM D1238, reaches 20 g/10 min. After completion of the reaction, the product may be discharged from a reactor by nitrogen pressure, and may be obtained in the form of pellets through pelletizing strands.

Then, the pellets may be subjected to solid-state polymerization under an inert atmosphere, such as nitrogen atmosphere, in a solid-state polymerization reactor or a rotatable vacuum dryer at 140 to 200 °C for 10 to 24 hours.

Until a melt flow rate measured at 230 °C under a load of 2.16 kg according to ASTM D1238 is 10 g/10 min or less, preferably 0.5 to 10 g/10 min, more preferably 1 to 10 g/10 min, still more preferably 3 to 8 g/10 min, high viscosity may be achieved by the solid-state polymerization.

The degree of vacuum applied during the solid-state polymerization may be selected within the degree of vacuum commonly used in the art to which the present invention pertains, without particular limitation.

The solid-state polymerization reactor may be a vessel vacuum dryer connected to a rotatable high vacuum pump, and the inert atmosphere may be nitrogen atmosphere.

In the present disclosure, the content of a monomer in a polymer may mean the weight (wt%) of the monomer added during preparation of the polymer or the weight (wt%) (based on the monomer) of a unit derived from the monomer.

The thermoplastic polyester elastomer (C) may have a melt flow rate of 0.5 to 10 g/10 min, preferably 1 to 10 g/10 min, more preferably 3 to 8 g/10 min as measured at 230 °C under a load of 2.16 kg according to ASTM D1238. Within this range, formability may be excellent.

For example, the thermoplastic polyester elastomer (C) may have a Shore hardness of 30 D to 50 D, preferably 35 D to 47 D, more preferably 35 D to 40 D. Within this range, the flexibility and mechanical strength of a composition may be excellent.

In the present disclosure, unless otherwise stated, Shore hardness may be measured according to the method specified in ISO 868 (Type D).

In the present disclosure, the elastomer may also be referred to as an elastic polymer or elastic rubber, as in the technical field to which the present invention belongs, and a commercially available product may be used as long as the product follows the definition of the present invention.

### Thermoplastic resin composition

For example, based on 100 parts by weight of the base resin, the thermoplastic resin composition may include a dye, a pigment, or a mixture thereof in an amount of 0.1 to 5 parts by weight, preferably 0.5 to 4 parts by weight, more preferably 0.5 to 3 parts by weight, still more preferably 0.5 to 2 parts by weight. Within this range, mechanical properties, processability, weather resistance, transparency, gloss, heat resistance, chemical resistance, and colorability may be excellent.

For example, the thermoplastic resin composition may have a suncream resistance of grade 3 or higher in a gray scale, preferably a suncream resistance of grade 3 or higher in a gray scale and 'no swelling or cracking' as measured according to the following method. Within this range, physical property balance and chemical resistance may be excellent, appearance quality may be improved, and high-quality automobile parts may be provided.

In the present disclosure, according to the suncream resistance measurement method, first, 100 mg of SPF 50+ suncream is applied to a white cotton pad for suncream testing having a size of at least 3 cm × 3 cm, preferably 5 cm × 5 cm. At this time, application is performed so that the suncream is evenly applied to the entire surface of the white cotton pad, and application may be performed using hands wearing chemical resistance latex gloves. The white cotton pad evenly coated with the suncream is placed on a disk test piece having a size of 10 cm × 10 cm × 2 mm, left in a constant temperature bath at 80 ± 2 °C for 1 hour, then taken out, the white cotton pad is removed, and the disk test piece is washed with a neutral detergent and dried. Then, the surface condition of the dried disk test piece is examined and judged by referring to a gray scale for ISO 105 (Textile - Test for color Fastness) contamination. The suncream resistance evaluation for the same composition is performed at least twice, preferably three times. Here, the size of the disk test piece should be larger than the white cotton pad and should be flat.

In the present disclosure, room temperature may be any point within the range of 23 ± 3 °C.

For example, the thermoplastic resin composition may have a heat deflection temperature of 85 °C or higher, preferably 85 to 100 °C as measured under 1.8 MPa according to ISO 75/Be. Within this range, physical property balance and heat resistance may be excellent, and thus high-quality automobile interior materials may be provided.

For example, the thermoplastic resin composition may have a brightness value (L value) of 1.5 or less, preferably 1.3 or less, more preferably 1.2 or less, still more preferably 0.1 to 1.2 as measured for a square disk-shaped injection specimen using a color meter in a specular component excluded (SCE) manner according to a CIE1976 L*a*b* color system. Within this range, due to excellent physical property balance and blackness, colors similar to those by painting may be implemented, and an aesthetically pleasing appearance may be provided. Blackness becomes better as the L value decreases.

In the present disclosure, the color meter is not particularly limited as long as it is an color meter commonly used in the technical field to which the present invention belongs, and specifically may be Ci7800 (X-rite CO.).

For example, the thermoplastic resin composition may have a gloss of 90 or more, preferably 93 or more, more preferably 95 or more, still more preferably 95 to 120 as measured at 60° using a square disk-shaped injection specimen according to ASTM D523. Within this range, physical property balance may be excellent, high gloss may be achieved, and colorability may be excellent.

For example, when a square disk-shaped injection specimen injected at an injection temperature 270 °C and an injection speed of 70 mm/min is observed with the naked eye, the thermoplastic resin composition may not produce flow marks or fogging. In this case, appearance quality may be excellent.

Based on 100 parts by weight of the base resin, the thermoplastic resin composition may further include 0.01 to 5 parts by weight, 0.05 to 3 parts by weight, 0.1 to 2 parts by weight or 0.5 to 1 part by weight of each of one or more selected from the group consisting of a heat stabilizer, a light stabilizer, a colorant, a lubricant, a release agent, an antistatic agent, an antibacterial agent, a processing aid, a metal deactivator, a flame retardant, a smoke suppressant, an anti-drip agent, an antifriction agent, and an anti-wear agent. Within this range, the required properties may be effectively implemented without deteriorating the inherent properties of the thermoplastic resin composition of the present invention.

The heat stabilizer may preferably include a primary heat stabilizer and a secondary heat stabilizer.

For example, the primary heat stabilizer may be a phenol-based heat stabilizer. Preferably, the primary heat stabilizer may include one or more selected from the group consisting of 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 1,6-hexanediolbis-[3-(3,5-di-t-butyl-4-hydroxyphenyl)propionate], 2,2-thiodiethylenebis-[3-(3,5-di-t-butyl-4-hydroxyphenyl)propionate], 3,5-di-t-butyl-4-hydroxybenzylphosphonatediethyl ester, tris(2,6-dimethyl-3-hydroxy-4-t-butylbenzyl)isocyanurate, tris(3,5-di-t-butyl-4-hydroxybenzyl)isocyanurate, tris[(3,5-di-t-butyl-4-hydroxyphenyl)propionyloxyethyl]isocyanurate, tris(4-t-butyl-2,6-dimethyl-3-hydroxybenzyl)isocyanurate, 2,2'-methylenebis(4-methyl-6-t-butylphenol)terephthalate, 1,3,5-trimethyl-2,4,6-tris(3,5-di-t-butyl-4-hydroxybenzyl)benzene, 3,9-bis[1,1-dimethyl-2-{β-(3-t-butyl-4-hydroxy-5-methylphenyl)propionyl oxy}ethyl]-2,4,8,10-tetraoxaspiro[5,5]undecane, 2,2-bis[4-(2-3,5-di-t-butyl-4-hydroxyhydrocinnamoyloxy)ethoxyphenyl]propane, and β-(3,5-dit-butyl-4-hydroxyphenyl)propionic acid stearyl ester, more preferably octadecyl 3-(3,5-ditertiary-butyl-4-hydroxyphenyl)propanoate (IR1076).

For example, the secondary heat stabilizer may be a phosphorus heat stabilizer. Preferably, the secondary heat stabilizer may include one or more selected from the group consisting of bis(dialkylphenyl)pentaerythritol diphosphite ester, phosphite ester, trioctyl phosphite, trilauryl phosphite, tridecyl phosphite, (octyl)diphenyl phosphite, tris(2,4-di-t-butylphenyl) phosphite, triphenyl phosphite, tris(butoxyethyl) phosphite, tris(nonylphenyl) phosphite, distearylpentaerythritol diphosphite, tetra(tridecyl)-1,1,3-tris(2-methyl-5-t-butyl-4-hydroxy-phenyl)butane diphosphite, tetra(C12-C15 mixed alkyl)-4,4'-isopropylidenediphenyl diphosphite, tetra(tridecyl)-4,4'-butylidenebis(3-methyl-6-t-butylphenol)diphosphite, tris(mono- and di-mixed nonylphenyl) phosphite, hydrogenated-4,4'-isopropylidenediphenol polyphosphite, phenyl(4,4'-isopropylidenediphenol)pentaerythritol diphosphite, distearylpentaerythritol diphosphite, tris[4,4'-isopropylidenebis(2-t-butylphenol)] phosphite, di(isodecyl)phenyl phosphite, 4,4'-isopropylidenebis(2-t-butylphenol)bis(nonylphenyl) phosphite, bis(2,4-di-t-butyl-6-methylphenyl) ethyl phosphite, 2-[{2,4,8,10-tetra-t-butyldibenz[d,f][1.3.2]-dioxa-phosphepine-6-yl}oxy]-N,N-bis[2-[{2,4,8,10-tetra-t-butyl-dibenz[d,f][1.3.2]-dioxaphosphepine-6-yl}oxy]ethyl]-ethaneamine, and 6-[3-(3-t-butyl-4-hydroxy-5-methylphenyl)propoxy]-2,4,8,10-tetra-t-butyldibenz[d,f][1.3.2]-dioxaphosphepine, more preferably tris(2,4-di-tert-butylphenyl) phosphite (IF168).

The lubricant may preferably include one or more selected from the group consisting of aliphatic amide-based lubricants, fatty acid ester-based lubricants, and olefin-based wax.

The aliphatic amide-based lubricants may preferably include one or more selected from the group consisting of stearamide, oleamide, erucamide, ethylene bis stearamide, and ethylene bis oleamide.

The fatty acid ester-based lubricants may preferably include one or more selected from the group consisting of fatty acid ester of mono alcohol or polyhydric alcohol, hydrogenated oil, butyl stearate, stearic acid monoglyceride, pentaerythritol tetrastearate, stearylstearate, esterwax and alkyl phosphate ester.

The olefin-based wax may be preferably polyethylene wax.

### Method of preparing a thermoplastic resin composition

A method of preparing the thermoplastic resin composition of the present invention includes a step of kneading and extruding, at 190 to 280 °C and 100 to 800 rpm, 100 parts by weight of a base resin including 79 to 86 % by weight of a non-graft copolymer (A) including an alkyl (meth)acrylate, an alkyl-substituted styrene-based compound, and a vinyl cyanide compound and 14 to 21 % by weight of a graft copolymer (B) including one or more selected from the group consisting of a graft copolymer (b-1) obtained by grafting an alkyl (meth)acrylate, an aromatic vinyl compound, and a vinyl cyanide compound onto a conjugated diene rubber having an average particle diameter of 200 to 500 nm and an alkyl acrylate-aromatic vinyl compound-vinyl cyanide compound graft copolymer (b-2) containing an alkyl acrylate rubber having an average particle diameter of 50 to 400 nm; and 8 to 21 parts by weight of a thermoplastic polyester elastomer (C). In this case, mechanical properties, heat resistance, chemical resistance, and suncream resistance may be excellent, high blackness may be expressed, color and appearance similar to those of a painted product may be realized due to uniform injection appearance, and thus the thermoplastic resin composition may be applied to unpainted molded articles.

The method of preparing the thermoplastic resin composition shares all the technical features of the thermoplastic resin composition described above. Therefore, the description of the overlapping parts will be omitted.

The kneading and extruding may be performed at 190 to 280 °C, more preferably 200 to 260 °C, still more preferably 220 to 250 °C using an extruder. Within this range, stable extrusion is possible and the mixing effect is excellent. At this time, the temperature is the temperature set in the cylinder.

For example, the kneading and extruding may be performed at a screw rotation speed of 100 to 800 rpm, preferably 200 to 700 rpm, more preferably 300 to 600 rpm. In this case, due to the appropriate throughput per unit time, the process efficiency may be excellent.

For example, the thermoplastic resin composition obtained through extrusion may be manufactured into pellets using a pelletizer.

Any extruder commonly used in the technical field to which the present invention belongs may be used in the present invention without any particular limitation. Preferably, a twin-screw extruder may be used.

### Molded article

A molded article of the present invention includes the thermoplastic resin composition. In this case, mechanical properties, heat resistance, chemical resistance, and suncream resistance may be excellent, high blackness may be expressed, color and appearance similar to those of a painted product may be realized due to uniform injection appearance, and thus the molded article may be applied to unpainted molded articles.

For example, the injection molded article may be an interior or exterior part of automobiles and a part for electrical or electronic products, specifically, a garnish or cover for automobile doors and center console parts.

A method of manufacturing the molded article may preferably include a step of preparing an extrudate by kneading and extruding, at 190 to 280 °C and 100 to 800 rpm, 100 parts by weight of a base resin including 79 to 86 % by weight of a non-graft copolymer (A) including an alkyl (meth)acrylate, an alkyl-substituted styrene-based compound, and a vinyl cyanide compound and 14 to 21 % by weight of a graft copolymer (B) including one or more selected from the group consisting of a graft copolymer (b-1) obtained by grafting an alkyl (meth)acrylate, an aromatic vinyl compound, and a vinyl cyanide compound onto a conjugated diene rubber having an average particle diameter of 200 to 500 nm and an alkyl acrylate-aromatic vinyl compound-vinyl cyanide compound graft copolymer (b-2) containing an alkyl acrylate rubber having an average particle diameter of 50 to 400 nm; and 8 to 21 parts by weight of a thermoplastic polyester elastomer (C) and a step of manufacturing a molded article by molding the extrudate. In this case, mechanical properties, heat resistance, chemical resistance, and suncream resistance may be excellent, high blackness may be expressed, color and appearance similar to those of a painted product may be realized due to uniform injection appearance, and thus the thermoplastic resin composition may be applied to unpainted molded articles.

For example, the extrudate may have a pellet or plate shape.

In the present disclosure, the plate shape is not particularly limited as long as it is defined as a plate shape in the technical field to which the present invention belongs, and may include, for example, a flat shape, a sheet shape, a film shape, a foil shape, etc.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

Materials used in examples and comparative examples are as follows.
* (A-1) MMA-α-methyl styrene-acrylonitrile copolymer: A non-graft copolymer (LG Chemical Co., 290UH) including an alkyl (meth)acrylate, an alkyl-substituted styrene-based compound, and a vinyl cyanide compound
* (A-2) PMMA resin: A polymethyl methacrylate resin (LX MMA Co., IH830)
* (b-1) MABS graft copolymer: A graft copolymer (LG Chemical Co., TR550) in which an alkyl (meth)acrylate, an aromatic vinyl compound, and a vinyl cyanide compound are grafted onto a conjugated diene rubber having an particle diameter of 250 to 350 nm
* (b-2) ASA graft copolymer: An alkyl acrylate-aromatic vinyl compound-vinyl cyanide compound graft copolymer (LG Chemical Co., SA130) containing an alkyl acrylate rubber having an particle diameter of 100 to 150 nm
* (b-3) ABS graft copolymer: An acrylonitrile-butadiene-styrene graft copolymer (LG Chemical Co., DP270) containing a butadiene rubber having an particle diameter of 250 to 350 nm
* (b-4) SAN copolymer: A styrene-acrylonitrile copolymer (LG Chemical Co., 81HF)
* (b-5) ASA graft copolymer: An alkyl acrylate-aromatic vinyl compound-vinyl cyanide compound graft copolymer (LG Chemical Co., SA927) containing an alkyl acrylate rubber having an particle diameter of 450 to 550 nm
* (b-6) ASA graft copolymer: An alkyl acrylate-aromatic vinyl compound-vinyl cyanide compound graft copolymer (LG Chemical Co., SA928) containing an alkyl acrylate rubber having an particle diameter of 300 to 400 nm
* (C) TPEE: A thermoplastic polyester elastomer (melt flow rate (230 °C, 2.16 kg): 5 g/10 min, Shore D hardness: 40 D, KEYFLEX BT2140D, LG Chemical Co.)
* (D) Black dye: Sumiplast Black HLC (Sumitomo Chemical Co.)

Here, MMA stands for methyl methacrylate, PMMA stands for polymethyl methacrylate, MABS stands for methyl methacrylate-acrylonitrile-butadiene-styrene graft copolymer, and TPEE stands for thermoplastic polyester elastomer.

### Examples 1 to 10 and Comparative Examples 1 to 12

According to the contents shown in Tables 1 and 2 below, the components shown in Tables 1 and 2 were introduced into a twin-screw extruder (25Φ), and melt-kneading and extrusion were performed to obtain pellets. The obtained pellets were used to manufacture injection molding specimens using an injection molding machine.

In addition, specimens for measuring gloss, brightness value, and appearance quality were prepared using a high-gloss mold in an injection machine with the obtained pellets. The high-gloss mold means that the mold surface is smoothly processed.

### [Test Examples]

The properties of the pellets or specimens obtained in Examples 1 to 10 and Comparative Examples 1 to 12 were measured by the following methods, and the results are shown in Tables 1 and 2 below.

### Measurement methods

* Suncream resistance: 100 mg of SPF 50+ suncream was applied to a white cotton pad for suncream testing having a size of 5 cm × 5 cm. At this time, application was performed so that the suncream was evenly applied to the entire surface of the white cotton pad, and application was performed using hands wearing chemical resistance latex gloves. The white cotton pad evenly coated with the suncream was placed on a disk test piece having a size of 10 cm × 10 cm × 2 mm, left in a constant temperature bath at 80 ± 2 °C for 1 hour, then taken out, the white cotton pad was removed, and the disk test piece was washed with a neutral detergent and dried. Then, the surface condition of the dried disk test piece was examined and judged by referring to a gray scale for ISO 105 (Textile - Test for color Fastness) contamination. In addition, the presence of swelling or cracking in the disk test piece was also evaluated. At this time, the suncream resistance evaluation was performed three times for the same composition, and the results were indicated. Here, suncream resistance becomes better as the gray scale increased.
* Heat deflection temperature (HDT, °C): Heat deflection temperature was measured under 1.8 MPa according to ISO 75/Be.
* Brightness value (L value): A brightness value (L value) was measured for a square disk-shaped injection specimen using a color meter (X-rite Co., Ci7800) in a specular component excluded (SCE) manner according to the CIE1976 L*a*b* color system. For black color, blackness improves as the L value decreases.
* Gloss: Gloss was measured at 60° using a square disk-shaped injection specimen according to ASTM D523.
* The occurrence of flow marks and fogging in a square disk-shaped injection specimen was visually determined, and the results are shown below.
   ∘: Excellent appearance as no flow marks or fogging occurs
   X: Flow marks or fogging occur, resulting in poor appearance

**[Table 1]**

| Classificat ion | Examples | | | | | | | | | |
|---|---|---|---|---|---|---|---|---|---|---|
| | 1 | 2 | 3 | 4 | 5 | 6 | 7 | 8 | 9 | 10 |
| (A-1) | 82 | 82 | 82 | 82 | 82 | 80 | 85 | 82 | 82 | 82 |
| (A-2) | | | | | | | | | | |
| (b-1) | 9 | 9 | 9 | 18 | | 10 | 7 | 12 | 6 | 9 |
| (b-2) | 9 | 9 | 9 | | 18 | 10 | 8 | 6 | 12 | |
| (b-3) | | | | | | | | | | |
| (b-4) | | | | | | | | | | |
| (b-5) | | | | | | | | | | |
| (b-6) | | | | | | | | | | 9 |
| (C) | 10 | 15 | 20 | 15 | 15 | 15 | 15 | 10 | 10 | 15 |
| (D) | 1 | 1 | 1 | 1 | 1 | 1 | 1 | 1 | 1 | 1 |

| Physical properties | | | | | | | | | | |
|---|---|---|---|---|---|---|---|---|---|---|
| Suncream resistance | Grade 3 | Grade 3 to 4 | Grade 4 | Grade 3 to 4 | Grade 3 to 4 | Grade 3 to 4 | Grade 3 to 4 | Grade 3 | Grade 3 | Grade 3 to 4 |
| HDT (°C) | 87 | 86 | 85 | 86 | 86 | 85 | 87 | 87 | 87 | 86 |
| Brightness value (L value) | 1.0 | 1.0 | 1.0 | 0.9 | 1.1 | 1.0 | 0.9 | 1.0 | 1.0 | 1.2 |
| Gloss | 95 | 95 | 95 | 96 | 94 | 95 | 95 | 95 | 95 | 94 |
| Appearance quality | ○ | ○ | ○ | ○ | ○ | ○ | ○ | ○ | ○ | ○ |

**[Table 2]**

| Classific ation | Comparative Examples | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| (A-1) | 82 | 82 | 82 | 75 | 82 | | | | 90 | 82 | 80 | 82 |
| (A-2) | | | | | | 80 | 80 | 80 | | | | |
| (b-1) | 18 | | 9 | 25 | | | | | 10 | 9 | 10 | 9 |
| (b-2) | | 18 | 9 | | | | 20 | 20 | | 9 | | |
| (b-3) | | | | | 18 | 20 | | | | | | |
| (b-4) | | | | | | | | | | | 10 | |
| (b-5) | | | | | | | | | | | | 9 |
| (b-6) | | | | | | | | | | | | |
| (C) | | | 5 | 15 | 10 | 10 | | 10 | 10 | 30 | 10 | 10 |
| (D) | 1 | 1 | 1 | 1 | 1 | 1 | 1 | 1 | 1 | 1 | 1 | 1 |

| Physical properties | | | | | | | | | | | | |
|---|---|---|---|---|---|---|---|---|---|---|---|---|
| Suncream resistance | Gra de 2 | Gra de 2 | Gra de 2 to 3 | Gra de 3 to 4 | Gra de 3 | Gra de 2 to 3 | Gra de 2 | Gra de 2 to 3 | Gra de 2 | Gra de 4 | Gra de 2 | Gra de 3 |
| HDT (°C) | 88 | 88 | 87 | 83 | 85 | 80 | 80 | 78 | 88 | 82 | 87 | 87 |
| Brightnes s value (L value) | 0.9 | 1.1 | 1.0 | 1.2 | 3.5 | 2.8 | 0.9 | 3.5 | 0.7 | 1.5 | 5.0 | 2.6 |
| Gloss | 96 | 94 | 95 | 94 | 90 | 87 | 88 | 94 | 95 | 90 | 92 | 93 |
| Appearance quality | ○ | ○ | ○ | ○ | X | X | ○ | X | ○ | X | X | X |

In Tables 1 and 2, each content of (A-1), (A-2), (b-1), (b-2), (b-3), (b-4), (b-5), and (b-6) is % by weight based on a total weight thereof, and each content of (C) and (D) is parts by weight based on 100 parts by weight in total of (A-1), (A-2), (b-1), (b-2), (b-3), (b-4), (b-5), and (b-6).

As shown in Tables 1 and 2, in the case of the thermoplastic resin compositions of Examples 1 to 10 according to the present invention, compared to Comparative Examples 1 to 12, suncream resistance, heat deflection temperature, brightness value, gloss, and appearance quality were excellent.

On the other hand, Comparative Examples 1 to 3, which did not include the TPEE (C) or included the TPEE (C) in small amounts, had poor suncream resistance. Comparative Example 10, which contained excessive amounts of the TPEE (C), had poor heat deflection temperature and appearance quality.

In addition, Comparative Example 4, which included the non-graft copolymer (A) below the range of the present invention and the graft copolymer (B) above the range of the present invention, had a low heat deflection temperature and thus poor heat resistance. Comparative Example 9, which included the non-graft copolymer (A) exceeding the range of the present invention and the graft copolymer (B) below the range of the present invention, had poor suncream resistance.

In addition, Comparative Example 5 including the graft copolymer (b-3) and Comparative Example 6 including the non-graft copolymer (A-2) and the graft copolymer (b-3) showed poor colorability due to deteriorated appearance quality and increased brightness value.

In addition, Comparative Example 7, which included the non-graft copolymer (A-2) and did not include the TPEE (C), had poor suncream resistance, heat deflection temperature, and gloss.

In addition, Comparative Examples 8, 11, and 12, including the non-graft copolymer (A-2), the SAN copolymer (b-4), or the ASA graft copolymer (b-5), showed poor suncream resistance, heat deflection temperature, brightness value, or appearance.

In conclusion, the thermoplastic resin composition according to the present invention including a base resin including a non-graft copolymer including an alkyl (meth)acrylate, an alkyl-substituted styrene-based compound, and a vinyl cyanide compound and one or more graft copolymers of a graft copolymer obtained by grafting an alkyl (meth)acrylate, an aromatic vinyl compound, and a vinyl cyanide compound onto a conjugated diene rubber having a predetermined average particle diameter and an alkyl acrylate-aromatic vinyl compound-vinyl cyanide compound graft copolymer containing an alkyl acrylate rubber having a predetermined average particle diameter; and a thermoplastic polyester elastomer in a predetermined content exhibited excellent mechanical properties, heat resistance, and suncream resistance and expressed high blackness. Thus, the thermoplastic resin composition according to the present invention had uniform injection appearance and was applicable to unpainted molded articles.

## Claims

1. A thermoplastic resin composition, comprising:
100 parts by weight of a base resin comprising 79 to 86 % by weight of a non-graft copolymer (A) comprising an alkyl (meth)acrylate, an alkyl-substituted styrene-based compound, and a vinyl cyanide compound and 14 to 21 % by weight of a copolymer (B) comprising a rubber component, an aromatic vinyl compound, and a vinyl cyanide compound; and
8 to 21 parts by weight of a thermoplastic polyester elastomer (C),
wherein the thermoplastic resin composition has a brightness value (L value) of 1.5 or less as measured for a square disk-shaped injection specimen using a color meter in a specular component excluded (SCE) manner according to a CIE1976 L*a*b* color system; and
the thermoplastic resin composition has a heat deflection temperature of 85 °C or higher as measured under 1.8 MPa according to ISO 75/Be.

2. The thermoplastic resin composition according to claim 1, wherein the rubber component is a conjugated diene rubber, an alkyl acrylate rubber, or a mixture thereof.

3. A thermoplastic resin composition, comprising:
100 parts by weight of a base resin comprising 79 to 86 % by weight of a non-graft copolymer (A) comprising an alkyl (meth)acrylate, an alkyl-substituted styrene-based compound, and a vinyl cyanide compound and 14 to 21 % by weight of a graft copolymer (B) comprising one or more selected from the group consisting of a graft copolymer (b-1) obtained by grafting an alkyl (meth)acrylate, an aromatic vinyl compound, and a vinyl cyanide compound onto a conjugated diene rubber having an average particle diameter of 200 to 500 nm and an alkyl acrylate-aromatic vinyl compound-vinyl cyanide compound graft copolymer (b-2) containing an alkyl acrylate rubber having an average particle diameter of 50 to 400 nm; and
8 to 21 parts by weight of a thermoplastic polyester elastomer (C).

4. The thermoplastic resin composition according to claim 1 or 3, wherein, based on a total weight thereof, the non-graft copolymer (A) comprises 30 to 60 % by weight of an alkyl (meth)acrylate, 20 to 50 % by weight of an alkyl-substituted styrene-based compound, and 5 to 35 % by weight of a vinyl cyanide compound.

5. The thermoplastic resin composition according to claim 3, wherein, based on a total weight thereof, the graft copolymer (b-1) comprises 35 to 65 % by weight of a conjugated diene rubber, 20 to 50 % by weight of an alkyl (meth)acrylate, 1 to 30 % by weight of an aromatic vinyl compound, and 1 to 20 % by weight of a vinyl cyanide compound.

6. The thermoplastic resin composition according to claim 3, wherein, based on a total weight thereof, the graft copolymer (b-2) comprises 30 to 70 % by weight of an alkyl acrylate rubber, 10 to 55 % by weight of an aromatic vinyl compound, and 1 to 30 % by weight of a vinyl cyanide compound.

7. The thermoplastic resin composition according to claim 1 or 3, wherein the thermoplastic polyester elastomer (C) has a melt flow rate of 0.5 to 10 g/10 min as measured at a temperature of 230 °C under a load of 2.16 kg according to ASTM D1238.

8. The thermoplastic resin composition according to claim 1 or 3, wherein the thermoplastic polyester elastomer (C) is an elastomer comprising an aromatic dicarboxylic acid or an ester derivative thereof; an aliphatic diol; and a polyalkylene oxide.

9. The thermoplastic resin composition according to claim 8, wherein the aromatic dicarboxylic acid comprises one or more selected from the group consisting of terephthalic acid, isophthalic acid, 2,6-naphthalene dicarboxylic acid, 1,5-naphthalene dicarboxylic acid, and 1,4-cyclohexane dicarboxylic acid.

10. The thermoplastic resin composition according to claim 8, wherein the aliphatic diol comprises one or more selected from the group consisting of ethylene glycol, propylene glycol, 1,2-propanediol, 1,3-propanediol, 1,4-butanediol, 1,5-pentanediol, 1,6-hexanediol, and 1,4-cyclohexanedimethanol.

11. The thermoplastic resin composition according to claim 8, wherein the polyalkylene oxide comprises one or more selected from the group consisting of polyethylene glycol, polypropylene glycol, polytetramethylene glycol, polyhexamethylene glycol, a copolymer of ethylene oxide and propylene oxide, an ethylene oxide addition polymer of polypropylene glycol, and a copolymer of ethylene oxide and tetrahydrofuran.

12. The thermoplastic resin composition according to claim 1 or 3, wherein, based on 100 parts by weight of the base resin, the thermoplastic resin composition comprises a dye, a pigment, or a mixture thereof in an amount of 0.1 to 5 parts by weight.

13. The thermoplastic resin composition according to claim 1 or 3, wherein the thermoplastic resin composition has a suncream resistance of grade 3 or higher in a gray scale.

14. The thermoplastic resin composition according to claim 3, wherein the thermoplastic resin composition has a heat deflection temperature of 85 °C or higher as measured under 1.8 MPa according to ISO 75/Be.

15. A method of preparing a thermoplastic resin composition, comprising kneading and extruding, at 190 to 280 °C and 100 to 800 rpm, 100 parts by weight of a base resin comprising 79 to 86 % by weight of a non-graft copolymer (A) comprising an alkyl (meth)acrylate, an alkyl-substituted styrene-based compound, and a vinyl cyanide compound and 14 to 21 % by weight of a graft copolymer (B) comprising one or more selected from the group consisting of a graft copolymer (b-1) obtained by grafting an alkyl (meth)acrylate, an aromatic vinyl compound, and a vinyl cyanide compound onto a conjugated diene rubber having an average particle diameter of 200 to 500 nm and an alkyl acrylate-aromatic vinyl compound-vinyl cyanide compound graft copolymer (b-2) containing an alkyl acrylate rubber having an average particle diameter of 50 to 400 nm; and 8 to 21 parts by weight of a thermoplastic polyester elastomer (C).

16. A molded article, comprising the thermoplastic resin composition according to any one of claims 1 to 14.
